# EUROPEAN PATENT APPLICATION

(11) **EP 2 840 254 A1**
(43) Date of publication of application: **25.02.2015**
(21) Application number: 13181165.5
(22) Date of filing: 21.08.2013
(51) Int. Cl.: F03D 1/00

(54) **Stackable housing of a wind turbine nacelle**

(71) Applicant: Siemens Aktiengesellschaft, 80333 München (DE)
(72) Inventor: Munk-Hansen, Thorkil, 7323 Give (DK)

(57) **Abstract**

The invention relates to a stackable housing of a wind turbine and a method to store and transport the housing.

A housing of a nacelle of a wind turbine comprises at least a first part and a second part, whereby the first part comprises a connection area that is prepared to connect the first part fixed but detachable to the second part. The first part comprises a hollow inner space, whereby the second part is arranged within the hollow inner space of the first part to reduce the physical dimensions of the housing for transportation and storage.

## Description

The invention relates to a stackable housing of a wind turbine and a method to store and transport the housing.

A wind turbine comprises a rotor, a nacelle and a tower. The rotor comprises rotor blades and a hub. The hub is mounted rotatable to the nacelle. The nacelle comprises an electrical generator to transfer the rotational energy into electrical energy.

The nacelle of the wind turbine in mounted on a tower. The nacelle often comprises the generator and components necessary for the operation of the wind turbine. The nacelle comprises a housing that is designed to protect the interior of the nacelle from ambient meteorological conditions like wind and rain.

Over the last years wind turbines increased in size. Meanwhile multi-megawatt wind turbines are common. Meanwhile a lot of wind turbines are built as direct driven wind turbines, where the rotor is directly and gearless coupled with the generator. A generator of a direct driven wind turbine has a bigger diameter then a generator of a geared wind turbine.

Due to this development, the nacelle and the housing of the wind turbine get larger in size. The housing of a wind turbine in produced in a production site. It is then transported to a site, where the nacelle of the wind turbine is mounted or to the installation site of the wind turbine.

For a housing with a larger length and a bigger diameter the transportation on a normal street can be problematic due to the width and the height of the housing. In addition the housing needs a lot of storage space in the production sites. It is therefore known to divide the housing into a lower and an upper part. The lower parts are designed in a way so that they can be stacked on top of each other. Also the upper parts can be stacked on top of each other. Thus the use of storage space is optimized. In addition the transportation of the half housing parts is easier.

This shows the disadvantage that only upper parts or only lower parts can be stacked and the upper and lower part of one housing needs to be transported as two parts.

It is the aim of the invention to provide an improved housing and a method to stack the parts of the housing.

The aim is reached by the subject matter according to the independent claims. Preferred embodiments of the invention are described in the dependent claims.

A housing of a nacelle of a wind turbine comprises at least a first part and a second part. The first part comprises a connection area that is prepared to connect the first part fixed but detachable to the second part.

The first part comprises a hollow inner space. The second part is arranged within the hollow inner space of the first part to reduce the physical dimensions of the housing for transportation and storage.

A wind turbine comprises a nacelle that is arranged on top of the tower. The nacelle comprises a housing that protects the components of the nacelle from meteorological and environmental influences.

The housing of the nacelle is segmented into different parts. It comprises at least a first part and a second part. The first part and the second part are prepared to be connected together in a way that the first part comprises a connection area to connect the second part to the first part.

The connection between the first part and the second part is a fixed but detachable connection. The connection can be established by bolts for example, thus the first part and the second part can be disconnected later on.

The first part of the housing of the nacelle of the wind turbine comprises a hollow inner space. Later after the installation of the housing at the nacelle of the wind turbine the hollow inner space of the first part of the housing comprises the components present in the nacelle of the wind turbine.

For transportation and storage purposes, the physical dimensions of the housing of the nacelle are reduced. The physical dimensions of the housing can be the height of the housing, the width of the housing, or the length of the housing. The physical dimensions of the housing are reduced by arranging the second part of the housing within the hollow inner space of the first part.

Thus the second part of the housing is arranged within the hollow inner space of the first part during transportation and storage of the housing.

Over the last years, the power of the wind turbines increased from several hundred kilowatts or a megawatt to a multi-megawatt range. Due to the increase in power of the wind turbine also the size of the wind turbines increased. Thus also the size of the housing of the nacelle increased.

The nacelle of the wind turbine is normally constructed at a manufacturing site of the wind turbine. The housing of the wind turbine is manufactured at the production site of the housing of the wind turbine, and is then delivered from the production site of the housing of the wind turbine to the manufacturing site of the nacelle.

There the housing is mounted to the nacelle of the wind turbine. Thereafter the nacelle of the wind turbine is transported to the installation site of the wind turbine.

The physical dimensions of the housing of the nacelle, especially the size of the housing of the nacelle, are an important factor during transportation and storage of the housing and the nacelle.

The transport of the nacelle of the wind turbine or housing of the wind turbine often goes to a tunnel or the transport route crosses under a bridge. Thus the physical size of the housing of the nacelle is limited to the space available in a tunnel or under a bridge. Thus the space available under a bridge or in a tunnel limits the size of the housing of the nacelle.

To construct a housing of a nacelle that is independent from the room available under a bridge or in a tunnel the housing of the nacelle is segmented into the different parts. The parts necessary to construct a housing of a nacelle of a wind turbine are arranged within the hollow inner space of a first part of the housing. So, at least a second part of the housing is arranged within the first part.

Thus, the physical dimensions of the housing are reduced for transportation and storage. In addition, all parts necessary to construct a housing of a nacelle of a wind turbine are arranged within one part of the wind turbine housing. Thus, all parts necessary to build a housing of a nacelle are arranged and thus stored within a first part of the housing. Thus, all the parts necessary to build a housing are packed together into one unit for transportation and storage. Thus, one unit for transportation comprises all the parts necessary to construct a housing.

Thus, only one unit has to be transported from the manufacturing site of the housing to the construction site of the nacelle of the wind turbine or to the installation site of the wind turbine.

The height of the first part is smaller than the height of the housing when the first part and the second part are connected.

Thus, the height of the first part is smaller than the height of the complete housing. Thus, the height of the housing is reduced by storing the second part of the housing within the hollow inner space of the first part. Thus, the height of the first part is the height of the transportation unit, whereby the height of the transportation unit is to the space available under bridges or in tunnels. Thus, the height of the whole housing of the nacelle is bigger than the height of the first part and thus is bigger than the space available under bridges or in a tunnel.

The first part is the lower part of the housing and the second part is the upper part of the housing.

The housing of the nacelle of the wind turbine is divided horizontally to form an upper part and a lower part of the housing. The upper part and the lower part of the housing are arranged vertically on top of each other to form the housing. The upper part of the housing is stored within the hollow inner space of the lower part of the housing.

Thus, the height of the housing during transportation or storage is reduced to the height of the lower part of the housing. Thus, the height of the lower part of the housing is limited by the space available in tunnels or under bridges.

In addition, the upper part of the housing is stored within the hollow inner space of the lower part of the housing and is thus transported together with the lower part of the housing as one unit. Thus, the upper part and the lower part are transported together in one transport as one unit.

The physical dimensions of the hollow inner space of the first part are bigger than the outer physical dimensions of the second part.

Thus, the second part of the housing is smaller than the hollow inner space of the first part of the housing. Thus, the second part of the housing fits within the hollow inner space of the first part. Thus, the second part can be arranged within the hollow inner space of the first part and can be transported together with the first part as one unit.

Thus, the housing can be transported as one unit with the smaller physical dimensions than the housing itself. In addition, only one transport is necessary to transport the second part and the first part of the housing.

The housing comprises a third part. The first part is the middle part of the housing, the second part is the upper part of the housing and the third part is the lower part of the housing.

The upper part comprises a connection area to be detachable connected to the middle part and a connection area is arranged mainly horizontally. The lower part comprises a connection area to be detachable connected to the middle part and a connection area is arranged mainly horizontally.

The middle part comprises a hollow inner space. The upper part and the lower part are arranged within the hollow inner space of the middle part to reduce the physical dimensions of the housing for transportation and storage of the housing.

The housing of the nacelle of the wind turbine comprises three parts. The upper part comprises a connection area to be connected to the middle part, and the lower part comprises a connection area to be connected to the middle part. The connection areas are arranged mainly horizontally.

Thus, later, when the middle part, the upper part, and the lower part are connected, the three parts of the nacelle are arranged vertically on top of each other.

During transportation and storage, the upper part and the lower part of the housing of the nacelle are arranged within a hollow inner space of the middle part. Thus, the height of the housing of the nacelle is reduced during transportation and storage.

During transportation and storage of the housing of the nacelle, the height of the housing is reduced to the height of the middle part.

The housing comprises an additional part that is arranged within the hollow inner space of the first part of the housing.

At least one additional part is arranged within the hollow inner space of the first part of the housing, whereby the additional part is a part of the housing and is prepared to be connected to the housing later during the installation of the housing.

The additional part is a hatch, or a door, or a ventilation grid, or a cover for a mist eliminator.

The housing comprises a hatch, or a door, or a ventilation grid, or a cover for a mist eliminator. The additional part of the housing is stored within the inner hollow space of the first part of the housing for transportation and storage of the housing.

Thus, the additional part is transported and stored together with the first part of the housing as one unit.

The lower part of the housing comprises an opening to accommodate the tower of the wind turbine when the housing is attached to the tower.

The nacelle of the wind turbine is arranged on top of a tower. The nacelle comprises a support structure, like a base frame, that is connected to the tower.

The housing of the nacelle covers the components present in the nacelle of the wind turbine and covers the support structure of the nacelle. An opening is provided within the housing of the nacelle to allow the tower to be attached to the support structure in the nacelle. The opening to accommodate the tower is arranged in the lower part of the housing.

The middle part of the housing comprises an opening to accommodate the tower of the wind turbine when the housing is attached to the tower.

The middle part of the housing of the nacelle comprises a floor that is arranged below the support structure of the nacelle when the middle part is attached to the nacelle of the wind turbine. An opening is present in the middle part of the housing of the nacelle to allow the tower to be attached to the support structure in the nacelle.

At least one of the parts of the housing comprises an opening that is connected to a mist eliminator, or a filter, or a ventilator, or a heat exchanger, or a cooling circuit, or hatch, or a door.

The nacelle of the wind turbine comprises several components. A component within the nacelle of the wind turbine can be a mist eliminator, a filter, a ventilator, a heat exchanger, or a cooling unit.

In addition, the nacelle of a wind turbine comprises a hatch or a door. The housing of the nacelle of the wind turbine comprises an opening that is connected to a component within the nacelle like a mist eliminator, a filter, a ventilator, a heat exchanger, a cooling unit.

In addition, an opening in the housing of the nacelle can be covered by a hatch or a door. An opening in the housing of the nacelle can be present in the first part or the second part of the housing. The opening can be present in an upper part, a middle part or a lower part of the housing.

The housing comprises an end section that comprises a connection area to be connected to the upper part and/or the middle part and/or the lower part of the housing at the rear end of the housing.

The connection area is arranged mainly vertical. The end section is arranged within the hollow inner space of the middle part to reduce the physical dimensions of the housing for transportation and storage of the housing.

A wind turbine comprises a rotor that is attached to the nacelle of the wind turbine. The rotor is attached to one end of the nacelle. The opposite end of the nacelle comprises an end section. The end section comprises a connection area to be connected to the upper part and/or the middle part and/or the lower part of the housing.

The end section of the housing is arranged within the hollow inner space of the middle part of the housing to reduce the physical dimensions of the housing for transportation and storage. The end section is stored horizontally within the middle part of the housing.

When the housing is installed at the nacelle of the wind turbine and the end section is connected to a part of the housing, the connection area is arranged mainly vertical.

Thus, the height of the housing is reduced by storing the end section within the inner hollow space of the middle part of the housing. Thus, the overall height of the housing is not limited by the space available under bridges or in tunnels.

The housing comprises a mainly round cross section in a vertical cut.

Thus, the housing comprises a cylindrical shape. Thus, the upper part and the lower part of the housing comprise a smaller width than the middle part of the housing. Thus, the width of the upper part and the lower part of the housing is smaller than the width of the hollow inner space of the first part, in general the middle part of the housing.

Thus, the upper part and the lower part of the housing can easily be stored within the inner hollow space of the middle part.

At least one part that is arranged in the hollow inner space is fixed in its position within the inner hollow space so that it keeps its position within the hollow inner space during transportation and movement of the housing.

Parts of the housing, which are arranged within the hollow inner space of the first part of the housing, might shift from their position during transportation and movement of the housing.

It is preferred to keep the parts in their original position. Thus, the parts arranged within the hollow inner space of the first part of the housing are fixed in their position during transportation and movement of the housing. Thus, damage due to the shifting parts can be avoided.

A method to store or transport a housing of a nacelle of a wind turbine comprises the step of arranging a part of a housing of a nacelle within the hollow inner space of the housing of the nacelle.

The invention is shown in more detail by the help of figures. The figures show a preferred configuration and do not limit the scope of the invention.
- FIG 1: shows a housing of a wind turbine,
- FIG 2: shows a second view of the housing,
- FIG 3: shows the housing of a nacelle of a wind turbine before the installation of the wind turbine,
- FIG 4: shows a second view of the housing prepared for transportation and storage,
- FIG 5: shows a second embodiment of the housing.

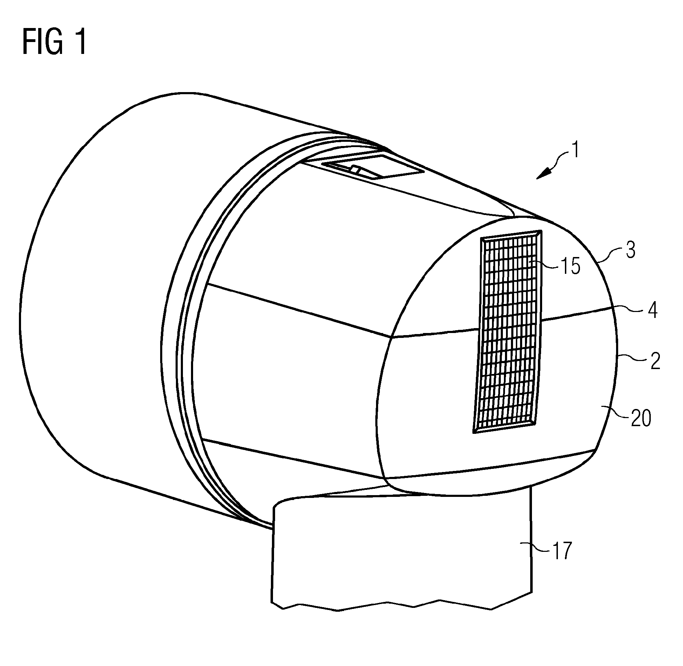

FIG 1 shows a housing 1 of a wind turbine. The housing 1 is segmented into several different parts 2, 3, 15 that are connected together to form the housing 1 of the wind turbine.

A first part 2 of the housing 1 comprises a connection area 4 to connect the first part 2 to a second part 3 of the wind turbine housing 1. A second part 3 comprises a connection area to connect a second part 3 to the first part 2 of the housing 1. The first part 2 and the second part 3 are connected along the connection area 4.

A ventilation grid 15 is arranged on the rear end 20 of the housing 1. The ventilation grid 15 is connected to the first part 2 and to the second part 3 of the housing 1.

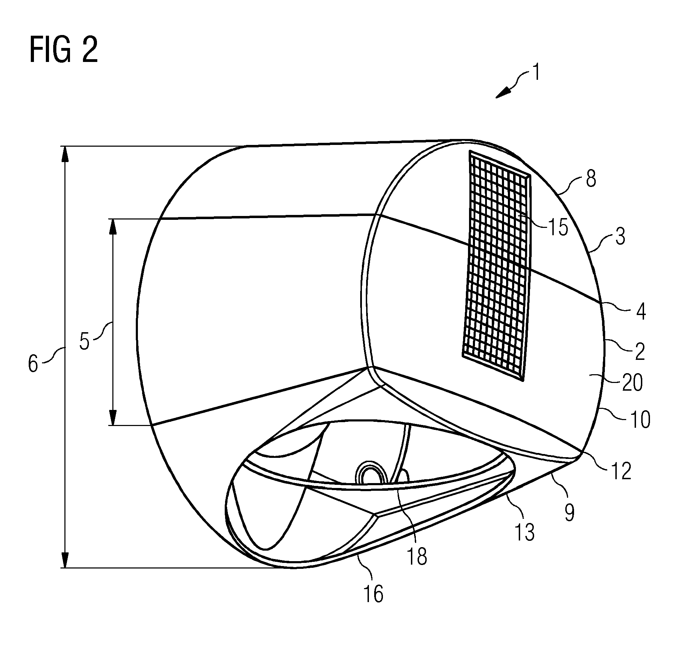

The housing 1 covers the nacelle of a wind turbine, and the nacelle of the wind turbine is arranged on top of a tower 17. FIG 2 shows a second view of the housing 1 of a nacelle of a wind turbine.

The housing 1 is segmented into several parts 2, 3, 9, 15. A first part 2 of the housing 1 is connected to a second part 3 at a connection area 4. A third part 9 of the housing 1 is connected to the first part 2 of the housing at a connection area 12. A ventilation grid 15 is arranged at the rear end 20 of the wind turbine, the ventilation grid 15 is connected to the first part 2 and a second part 3 of the housing 1.

The connection areas 4 and 12 are arranged mainly horizontally so that the first part 2 is a middle part 10 of the housing, the second part 3 is an upper part 11 and the third part 9 is a lower part 13 of the housing 1. The lower part 13, the middle part 10 and the upper part 11 are connected together on top of each other in a vertical manner.

The height 5 of the middle part 10 is smaller than the overall height 6 of the housing 1.

The lower part 13 of the housing 1 of the nacelle of a wind turbine shows an opening 16 to accommodate the tower when the housing 1 is mounted to the nacelle of a wind turbine. In addition, the middle part 10 of the housing 1 shows an opening 18 to accommodate the tower.

At the installation of the wind turbine, the nacelle is arranged on top of a tower. The housing 1 covers the nacelle of the wind turbine. The nacelle of the wind turbine comprises a main structure, for example a base frame to connect to the tower. The housing 1 comprises an opening 16, 18 to allow the tower to be connected to the main structure of the nacelle of the wind turbine.

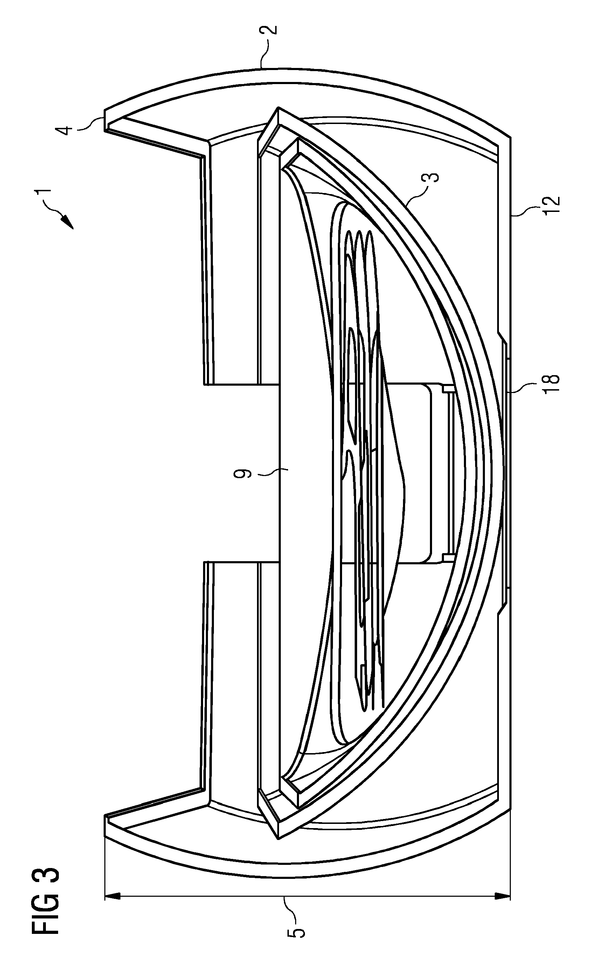

FIG 3 shows the housing 1 of a nacelle of a wind turbine before the installation of the wind turbine.

The housing 1 comprises the first part 2 and a second part 3. The first part 2 comprises a hollow inner space whereby the dimensions of the hollow inner space of the first part 2 are bigger than the outer dimensions of a second part 3. The second part 3 of the housing 1 is arranged within the hollow inner space of the first part 2.

In addition, a third part 9 of the housing 1 is arranged within the inner hollow space of the first part 2. The first part 2 comprises a connection area 4 to connect the second part 3 to the first part 2. In addition, the first part 2 comprises a connection area 12 to connect the third part 9 to the first part 2.

After the installation of the wind turbine, the second part 3 will be connected to the first part 2 at a connection area 4. The third part 9 will be connected to the first part 2 at a connection area 12 to form the housing 1 of the wind turbine.

In FIG 3 the second part 3 and the third part 9 are arranged within the inner hollow space of the first part 2 for transportation and storage of the housing 1.

The physical dimensions of the housing 1 are thus reduced for an easier hand-ling of the housing 1 during transportation and storage. The overall height of the housing 1 during transportation and storage is reduced to the height 5 of the first part 2 of the housing 1.

A second part 3 comprises a hollow inner space, which dimensions are bigger than the outer dimensions of the third part 9. Thus, the third part 9 of the housing 1 can be stored within the second part 3 of the housing.

Additional parts of the housing 1 are stored within the inner hollow space of the third part 9.

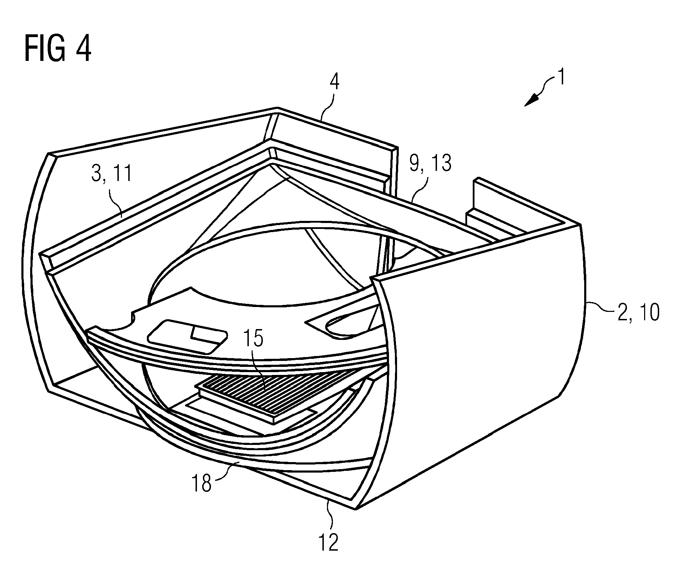

FIG 4 shows a second view of the housing 1 prepared for transportation and storage.

The housing 1 of the nacelle of a wind turbine comprises a first part 2, a second part 3, and a third part 9. The first part 2 comprises a hollow inner space, whereby the dimensions of the hollow inner space are bigger than the outer dimensions of the second part 3. Thus, the second part three can be arranged within the hollow inner space of the first part 2.

The second part 3 comprises a hollow inner space, whereby the dimensions of the hollow inner space of the second part 3 are bigger than the outer dimensions of the third part 9. Thus, the third part 9 can be arranged within the hollow inner space of the second part 3.

In addition, a ventilation grid 15 is arranged within the hollow inner space of the third part 9 and the second part 3.

The first part 2 comprises a connection area 4 to connect the second part 3 to the first part 2. In addition, the first part 2 comprises a connection area 12 to connect the third part 9 to the first part 2.

The connection areas 4, 12 are arranged mainly horizontally, thus the first part 2, the second part 3 and the third part 9 can be arranged and connected in a vertical manner.

After the installation of the housing of the nacelle of the wind turbine, the second part 3 will be connected to the first part 2 and a third part 9 will also be connected to the first part 2.

After the parts are connected to form the housing 1, the first part 2 forms the middle part of the housing, the second part 3 forms the upper part and the third part 9 forms the lower part of the housing.

The ventilation grid 15 is connected to the rear end of the housing and comprises a connection area to be connected to the first part 2 and the second part 3. Additional parts of the housing or material used for the installation of the housing can also be stored within the inner hollow space of the first part 2 of the housing 1.

The first part 2 of the housing 1 comprises an opening 18, whereby the opening 18 is used for the tower of the wind turbine after the installation of the wind turbine.

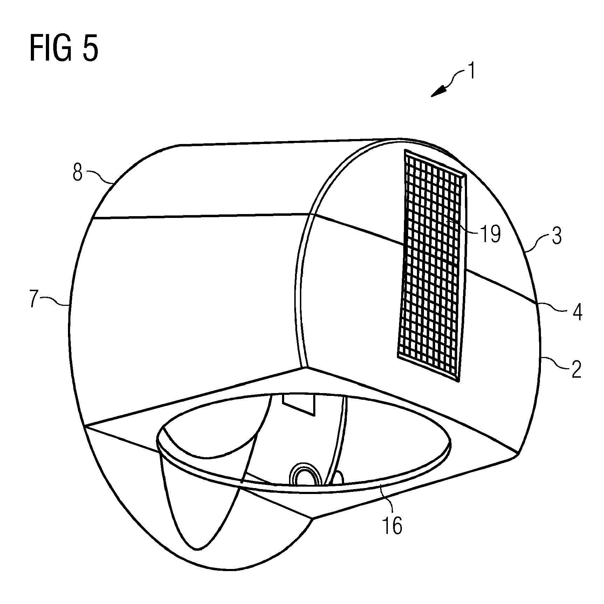

FIG 5 shows a second embodiment of the housing 1. The housing 1 comprises a first part 2 and a second part 3, whereby the first part 2 forms the lower part 7 of the housing 1 and a second part 3 forms the upper part 8 of the housing. The lower part 7 of the housing 1 comprises an opening 16 to accommodate the tower of the wind turbine after the installation of the housing at a nacelle of a wind turbine.

The housing 1 comprises an end section 19 that is connected to the upper part 8 of the housing and the lower part 7 of the housing 1.

The lower part 7 of the housing 1 comprises a connection area 4 to connect the upper part 8 to the lower part 7. The connection area 4 is arranged mainly horizontally so that the upper part 8 and the lower part 7 of the housing 1 are connected together in a vertical manner on top of each other.

The height of each of the lower part 7 and the upper part 8 are smaller than the overall heights of the housing 1. Thus, by disconnecting the upper part 8 from the lower part 7, the heights of the housing 1 is reduced.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Housing (1) of a nacelle of a wind turbine
- whereby the housing (1) comprises at least a first part (2) and a second part (3),
- whereby the first part (2) comprises a connection area (4) that is prepared to connect the first part (2) fixed but detachable to the second part (3),
- whereby the first part (2) comprises a hollow inner space,
- whereby the second part (3) is arranged within the hollow inner space of the first part (2) to reduce the physical dimensions of the housing (1) for transportation and storage.

2. Housing (1) according to claim 1, whereby the height (5) of the first part (2) is smaller than the height (6) of the housing (1) when the first part (2) and the second part (3) are connected.

3. Housing (1) according to claim 2, whereby the first part (2) is a lower part (7) of the housing (1) and the second part (3) is an upper part (8) of the housing (1).

4. Housing (1) according to one of the preceding claims, whereby the physical dimensions of the hollow inner space of the first part (2) are bigger than the outer physical dimensions of the second part (3),

5. Housing (1) according to one of the claims 1 to 2,
- whereby the housing (1) comprises a third part (9),
- whereby the first part (2) is a middle part (10) of the housing (1), and the second part (3) is an upper part (11) of the housing (1), and the third part (9) is a lower part (13) of the housing (1),
- whereby the upper part (11) comprises a connection area (4) to be detachable connected to the middle part (10) and the connection area (4) is arranged mainly horizontally,
- whereby the lower part (13) comprises a connection area (12) to be detachable connected to the middle part (10) and the connection area (12) is arranged mainly horizontally,
- whereby the middle part (10) comprises a hollow inner space,
- whereby the upper part (11) and the lower part (13) are arranged within the hollow inner space of the middle part (10) to reduce the physical dimensions of the housing (1) for transportation and storage of the housing (1).

6. Housing (1) according to one of the preceding claims, whereby the housing (1) comprises an additional part (14) that is arranged within the hollow inner space of the first part of the housing (1).

7. Housing (1) according to claim 6, whereby the additional part (14) is a hatch, or a door, or a ventilation grid (15), or a cover for a mist eliminator.

8. Housing (1) according to one of the claims 5 to 7, whereby the lower part (13) of the housing (1) comprises an opening (16) to accommodate the tower (17) of the wind turbine when the housing (1) is attached to the tower (17).

9. Housing (1) according to one of the claims 5 to 8, whereby the middle part (10) of the housing (1) comprises an opening (18) to accommodate the tower (17) of the wind turbine when the housing (1) is attached to the tower (17).

10. Housing (1) according to one of the preceding claims, whereby at least one of the parts of the housing (1) comprises an opening that is connected to a mist eliminator, or a filter, or a ventilator, or a heat exchanger, or a cooling circuit, or a hatch, or a door.

11. Housing (1) according to one of the preceding claims,
- whereby housing (1) comprises an end section (19) that comprises a connection area to be connected to the upper part (11), and/or the middle part (10), and/or the lower part (13) of the housing (1) at the rear end (20) of the housing (1),
- whereby the connection area is arranged mainly vertical when the end section is connected to a part of the housing,
- whereby the end section (19) is arranged within the hollow inner space of the middle part (10) to reduce the physical dimensions of the housing (1) for transportation and storage of the housing (1).

12. Housing (1) according to one of the preceding claims, whereby the housing (1) comprises a mainly round cross section in a vertical cut.

13. Housing (1) according to one of the preceding claims, whereby the at least one part (8, 9, 11, 13, 14, 19) that is arranged in the hollow inner space is fixed in its position within the hollow inner space so that it keeps its position within the hollow inner space during transportation and movement of the housing (1).

14. Method to store or transport a housing (1) of a nacelle of a wind turbine according to one of the preceding claims, comprising the step of
- arranging a part (8, 9, 11, 13, 14, 19) of the housing (1) of the nacelle within the hollow inner space of the housing (1) of the nacelle.
